(19) Europäisches Patentamt / European Patent Office / Office européen des brevets

(11) **EP 2 696 551 B1**

(12) **EUROPEAN PATENT SPECIFICATION**

(45) Date of publication and mention of the grant of the patent:
**31.05.2017 Bulletin 2017/22**

(21) Application number: **11866545.4**

(22) Date of filing: **09.11.2011**

(51) Int Cl.:
*H04L 29/06* (2006.01)  *H04L 29/12* (2006.01)
*H04L 29/08* (2006.01)  *H04M 1/2745* (2006.01)

(86) International application number:
**PCT/CN2011/081991**

(87) International publication number:
**WO 2012/163044 (06.12.2012 Gazette 2012/49)**

(54) **CONTACT PHOTO PROVIDING METHOD, MANAGEMENT PLATFORM AND USER TERMINAL**

VERFAHREN ZUR BEREITSTELLUNG VON KONTAKTFOTOS, VERWALTUNGSTPLATTFORM UND BENUTZERENDGERÄT

PROCÉDÉ DE FOURNITURE DE PHOTO DE CONTACT, PLATEFORME DE GESTION ET TERMINAL UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2011 CN 201110140772**

(43) Date of publication of application:
**12.02.2014 Bulletin 2014/07**

(73) Proprietor: **Huawei Technologies Co., Ltd.**
**Longgang District**
**Shenzhen, Guangdong 518129 (CN)**

(72) Inventors:
• **PIAO, Ning**
  **Shenzhen**
  **Guangdong 518129 (CN)**
• **SUN, Qian**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 101 541 003  CN-A- 101 795 260**
**CN-A- 102 215 302  US-A1- 2009 165 090**

## Description

### FIELD OF THE INVENTION

The present invention relates to the field of communications technologies, and in particular, to a method for providing a contact avatar, a platform for managing a contact avatar, and a user terminal.

### BACKGROUND OF THE INVENTION

With the popularization of smart phones, more and more smart phones support a display of a contact avatar for convenience of displaying an avatar to identify a user when a contact makes a call. User experience of this picture display manner or a picture plus text display manner is far better than user experience of a conventional name text display, for convenience of a user to identify a caller.

Usually, the user needs to preset a contact avatar picture, and obtains the avatar picture of the contact by using a locally stored picture or by taking a photo. In an application, the avatar picture needs to be stored in advance, or the avatar picture is able to be stored only when the contact is onsite for photo-taking. Actually, in many circumstances, such a scenario is non-universal, so that the function of displaying a contact avatar of a mobile phone becomes a decoration with low usage frequency and bad user experience.

Document US 2009/165090 A1 discloses a method for obtaining user information (pixie) including a user avatar when permitted and the pixie could include the last name and the first name of the user, but no indication about how to obtain and send a gender of the user to the user terminal.

### SUMMARY OF THE INVENTION

Accordingly, it is necessary to provide a method for providing a contact avatar in a phonebook, to solve a problem that it is difficult to obtain a contact avatar in a phonebook.

In addition, a platform for managing a contact avatar in a phonebook and a user terminal are provided.

A method for providing a contact avatar includes:

receiving, by a platform for managing a contact avatar, a request message for obtaining a contact avatar, where the request message is sent by a user terminal and includes text attribute information of the contact, wherein the text attribute information comprises a name of the contact;

extracting, by the platform for managing a contact avatar, a contact avatar picture tag from the text attribute information in the request message, and using a surname or a first name of the contact as the contact avatar picture tag;

determining, by the platform for managing a contact avatar, a contact avatar picture according to the extracted tag; and calculating(212), by the platform for managing a contact avatar, a gender probability according to the first name of the contact, and selecting a gender with a large probability, and sending the contact avatar picture and the gender to the user terminal.

A platform for managing a contact avatar includes:

a receiving unit, configured to receive a request message for obtaining a contact avatar, where the request message is sent by a user terminal and includes text attribute information of the contact;

a tag extracting unit, configured to extract a contact avatar picture tag according to the text attribute information in the request message, wherein the tag extracting unit further comprises a surname extracting subunit, configured to extract, when the text attribute information comprises a surname of the contact, the contact avatar picture tag according to the text attribute information in the request message, comprising: using the surname of the contact as the contact avatar picture tag to extract a contact avatar picture, the tag extracting unit further comprises a gender extracting subunit, configured to calculate a gender probability according to a first name of the contact, select a gender with a large probability and recommend the gender to the user terminal, when the text attribute information comprises the first name of the contact;

an avatar selecting unit, configured to determine a contact avatar picture according to the extracted tag; and

a sending unit, configured to send the extracted contact avatar picture to the user terminal.

A user terminal includes a display and a memory, and further includes: a sending unit, configured to send a request message for obtaining a contact avatar to a platform for managing a contact avatar; a receiving unit, configured to receive a contact avatar picture returned by the platform for managing a contact avatar and store the contact avatar picture to the memory, where the contact avatar picture has a tag attribute; and an avatar selecting unit, configured to extract a tag according to text attribute information of the contact, and match the tag with a tag of the avatar picture to obtain a recommended avatar picture.

In embodiments of the present invention, a platform for managing a contact avatar receives a request message for obtaining a contact avatar, where the request message is sent from a user terminal and includes text attribute information of the contact, extracts a contact avatar picture tag according to the text attribute information, determines a contact avatar picture according to the extracted tag, and sends the contact avatar picture to the user terminal. A user may obtain an avatar picture related to a contact according to the text attribute information of the contact, so that the avatar of the contact is displayed in a contact directory. In this way, the application is more personalized with good user experience, which facilitates promotion of a network address book service.

## BRIEF DESCRIPTION OF THE DRAWINGS

To illustrate the technical solutions according to the embodiments of the present invention or in the prior art more clearly, the accompanying drawings for describing the embodiments or the prior art are given below. Apparently, the accompanying drawings in the following description are only some embodiments of the present invention, and persons of ordinary skill in the art can derive other drawings from the accompanying drawings without creative efforts.

FIG. 1 is a flowchart of a method for providing a contact avatar according to an embodiment of the present invention;
FIG. 2 is a signaling diagram of a method for providing a contact avatar according to an embodiment of the present invention;
FIG. 3 is a flowchart of a method for providing a contact avatar according to an embodiment of the present invention;
FIG. 4 is a structural diagram of a system for providing a contact avatar according to an embodiment of the present invention;
FIG. 5 is a schematic structural diagram of a platform for managing a contact avatar according to an embodiment of the present invention;
FIG. 6 is a schematic structural diagram of a user terminal according to an embodiment of the present invention; and
FIG. 7 is a schematic structural diagram of another user terminal according to an embodiment of the present invention.

## DETAILED DESCRIPTION OF THE EMBODIMENTS

The technical solutions are introduced in the following with reference to detailed embodiments. A platform for managing a contact avatar may be set at the network side. As a logical device at the network side, the platform for managing a contact avatar may exist in dependence on another entity device at the network side or exist as an independent network device. The platform for managing a contact avatar may also be multiple devices in cloud storage, a storage server, or a data center of pictures. For example, the platform for managing a contact avatar is integrated on an application server AS on the network. The platform for managing a contact avatar is configured to store a contact avatar picture, or access, according to a user request, a server that stores the contact avatar picture and provide a user with the contact avatar picture, where the contact avatar picture has a tag attribute.

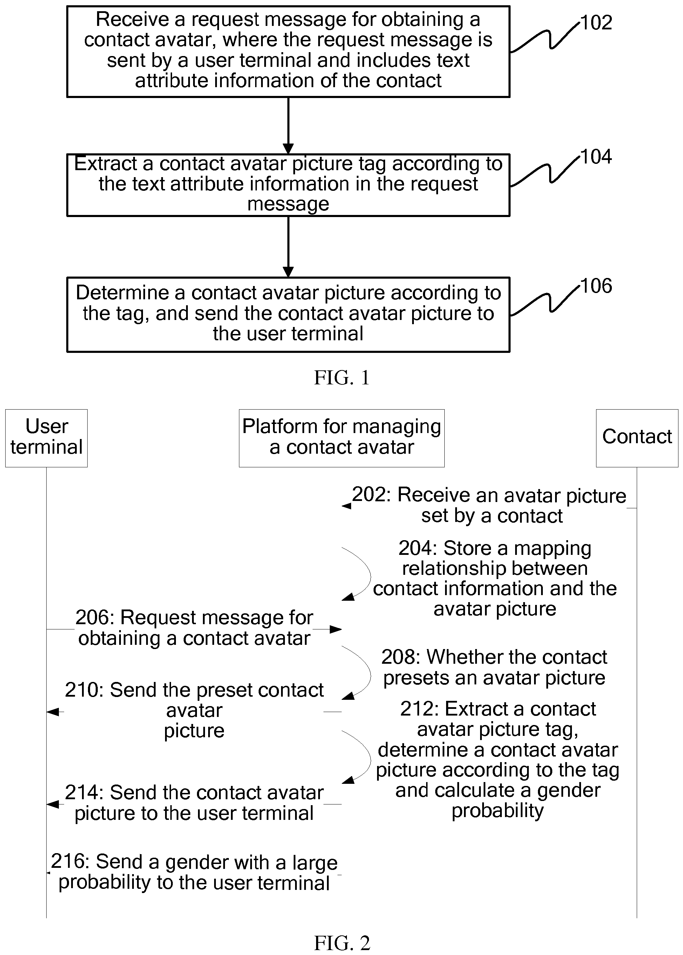

As shown in FIG. 1, a method for providing a contact avatar according to an embodiment of the present invention includes the following steps:

Step 102: A platform for managing a contact avatar receives a request message for obtaining a contact avatar, where the request message is sent by a user terminal and includes text attribute information of the contact. The request message may be a request message based on the Internet Protocol IP protocol or a request message based on the Session Initiation Protocol SIP sent by the user terminal in online state through a network server to the platform for managing a contact avatar. The text attribute information of the contact included in the request message is one or more pieces of information such as a name, a company, an address and an occupation of the contact. The user terminal mentioned in this embodiment may be a smart phone, for example, a mobile phone with an Android system, an iOS system or a Windows system. A user may request downloading a contact avatar from the network side through an application in the smart phone, where the application may be downloaded and installed through an application store App Store. The user terminal may also be an electronic device such as a tablet computer (for example, an iPad2), an e-book (for example, a Kindle3), a personal computer PC, and a notebook computer NB. The user terminal may access the platform for managing a contact avatar at the network side through a manner such as a wireless local area network WIFI, a third-generation communications technology 3G, long term evolution LTE, an enhanced data rate for GSM evolution EDGE, and a general packet radio service GPRS, and request downloading a contact avatar picture.

Step 104: The platform for managing a contact avatar extracts a contact avatar picture tag according to the text attribute information in the request message. The platform for managing a contact avatar uses a character included in the text attribute information as a tag for picture retrieval. The text attribute information includes one or more pieces of information such as a name, an occupation, a company and a terminal type of the contact. If the text attribute information includes a name, the platform for managing a contact avatar uses a surname or a first name of the contact as the contact avatar picture tag. The platform for managing a contact avatar matches one or more pictures according to the surname of the contact. The platform for managing a contact avatar may store the contact avatar picture in advance, or access a server that stores a picture, where the picture stored by the picture server have a tag attribute.

The platform for managing a contact avatar may send a contact avatar picture with a large gender probability to the user terminal, or send avatars of both genders for a user to select, where the avatar corresponding to a large gender probability is displayed preferentially, and is used as a default selection. By providing recommended gender information for the user, a personalized requirement for a service is better fulfilled, so that service popularity is greatly improved.

If the text attribute information includes occupation information about the contact, the occupation information may also be used as the contact avatar picture tag. The platform for managing a contact avatar determines a contact avatar picture according to the tag obtained through matching. For example, the occupation information of Xiaoli is a nurse. In this case, "nurse" is used as the picture tag, and a recommended picture is obtained through matching and is recommended to the user.

If the text attribute information includes company information about the contact, the company information may also be used as the contact avatar picture tag. The platform for managing a contact avatar determines according to the tag obtained through matching that, the contact avatar picture is a company trademark picture obtained through matching by using the company name as the picture tag. For example, the company information of Xiaowang is HUAWEI. The platform for managing a contact avatar may use "HUAWEI" as the picture tag, and obtains HUAWEI's trademark LOGO picture through matching and use the HUAWEI's trademark LOGO picture as the contact avatar picture of Xiaowang.

Step 106: The platform for managing a contact avatar determines a contact avatar picture according to the extracted tag, and sends the contact avatar picture to the user terminal. After obtaining a picture through matching, the platform for managing a contact avatar sends one or more pictures obtained through matching to the user terminal, or sends avatar pictures of multiple contacts in batch according to a user request. These avatar pictures are displayed in group according to contact types, where each contact has default avatar picture recommendation. The platform for managing a contact avatar may also specify a file format of the picture according to the user request, such as PNG, JPEG, BMP and GIF. The request message for obtaining the contact avatar received by the platform for managing a contact avatar includes an avatar picture format parameter. The platform for managing a contact avatar sends a contact avatar picture of a corresponding format to the user terminal. For example, for a contact Piao Ning, "Piao" may be used to match a celebrity with the surname Piao, for example, a picture of Piao Zhixing is used as the contact avatar; for a contact Sun Qian, "Sun" may be used to match an avatar picture, and a cartoon picture of Sun Wukong is used as the contact avatar picture. The platform for managing a contact avatar may also calculate a gender probability according to the first name "Ning", selects a gender with a large probability and sends the gender to the user terminal.

Multiple algorithms may be adopted to calculate the gender probability. In this embodiment, a Bayesian algorithm is taken as an example for illustration. A major premise of assumption is: First names of males and females are significantly different. A Bayesian statistical method is adopted as follows:

1. Select training data: XX males and XX females.
2. Calculate a prior probability: P(m) indicates a male probability of a person in a training set, and P(f) indicates a female probability of a person in the training set, where

P(m) = |male|/n, |male| is the number of males in the training set, and n is the total number of persons in the training set; and
P(f) = |female|/n, |female| is the number of females in the training set, and n is the total number of persons in the training set.

3. Calculate a conditional probability: P(w1w2|m) indicates a male probability of a name with a first name of wlw2, where w1 and w2 each represent a Chinese character or a letter in the name, P(w1w2|f) indicates a female probability of the name with the first name of wlw2, P(w2|m) indicates a male probability of a name with a first name of w2, and P(w2|f) indicates a female probability of the name with the first name of w2, where

P(w1w2|m) = (|{w1w2 & male} | + 1)/(|male| + M), |{w1w2 & male} | is the number of males in the training set whose first names are wlw2, and M is the number of males with different names in the training set;
P(w1w2|f) = (|{w1w2 & female} | + 1)/(|female| + F), |{w1w2 & female} | is the number of females in the training set whose first names are wlw2, and F is the number of females with different names in the training set; P(w2|m) = (|{w2 & male} | + 1)/(|male| + M^' ), |{w2 & male} | is the number of males in the training set whose first names are w2, and M^' is the number of males with different names in the training set; and P(w2|f) = (|{w2 & female} | + 1)/(|female| + F^'), |{w2 & female} | is the number of females in the training set whose first names are w2, and F^' is the number of females with different names in the training set.

4. For an unknown name, use a Bayesian formula to determine the gender:

$$\text{gender} = \operatorname*{arg\,max}_{\text{gender} \in \{m, f\}} P(\text{gender} \mid \text{name}) = \operatorname*{arg\,max}_{\text{gender} \in \{m, f\}} \frac{P(\text{name} \mid \text{gender})P(\text{gender})}{P(\text{name})}$$

$$= \operatorname*{arg\,max}_{\text{gender} \in \{m, f\}} P(\text{name} \mid \text{gender})P(\text{gender}) = \operatorname*{arg\,max}_{\text{gender} \in \{m, f\}} P(w_1 w_2 \mid \text{gender})P(\text{gender})$$

where, $\operatorname*{arg\,max}_{\text{gender} \in \{m, f\}}$ indicates whether the gender (gender) is male (m) or female (f) when a value of a formula behind is maximized.

The platform for managing a contact avatar may also query whether the contact defines an avatar according to the contact information included in the request message, where the contact information includes an E-mail address, a mobile phone number, a service number, a domain name, and so on. The platform for managing a contact avatar receives in advance an avatar picture set by the contact, stores a mapping relationship between the avatar picture and the contact information, and queries the stored mapping relationship according to the contact information when the received request message includes the contact information. The avatar picture corresponding to the contact information takes priority over the contact avatar picture determined according to the extracted tag by the platform for managing a contact avatar. In this way, a contact avatar picture set by a user is better and preferentially applied, thereby achieving precise location of an avatar picture and good user experience.

A platform for managing a contact avatar receives a request message for obtaining a contact avatar, where the request message is sent by a user terminal and includes text attribute information of the contact, extracts a contact avatar picture tag according to the text attribute information, determines a contact avatar picture according to the extracted tag, and sends the contact avatar picture to the user terminal. A user may obtain an avatar picture related to a contact according to the text attribute information of the contact, so that the avatar of the contact is displayed in a contact directory. In this way, the application is more personalized with good user experience, which facilitates promotion of a network address book service. Besides, by matching a format of the picture that the user terminal requests downloading with a format supported by the terminal, and then providing the picture for the user, the user does not need to perform picture conversion, and a case of a file format that fails to be supported by the terminal is avoided.

As shown in FIG. 2, a method for providing a contact avatar according to an embodiment of the present invention includes:

Step 202: A platform for managing a contact avatar receives an avatar picture set by a contact. The platform for managing a contact avatar opens an interface for the contact and allows the contact to set a mapping relationship between contact information of the contact and an avatar picture, allows the contact to set a contact avatar picture by uploading a local picture or taking a photo online, and allows the contact to cut part of a large picture into a small picture to be used as an avatar picture.

Step 204: The platform for managing a contact avatar stores the mapping relationship between the contact information and the avatar picture. The platform for managing a contact avatar may also store the avatar picture set by the contact in a general picture file format, such as PNG, JPEG, BMP and GIF. The platform for managing a contact avatar stores these obtained avatar pictures set by contacts to a contact avatar database. In a setting process, the contact avatar database may also be queried according to contact information provided by a contact. if a contact avatar picture is set, the contact may be prompted and the set contact avatar picture is displayed to the contact who performs the setting. If multiple avatars are set by the contact, the contact is prompted to select one of the avatars as a default avatar picture. Persons of ordinary skills in the art may know by reading the present application that, the method may include step 202 and step 204 or may not include step 202 or step 204. The contact may preset the avatar picture or may not preset the avatar picture.

Step 206: The platform for managing a contact avatar receives a request message for obtaining a contact avatar, where the request message is sent by a user terminal and includes text attribute information of a contact and contact information of the contact. The text attribute information includes one or more pieces of information such as a name, an occupation, a company and an address of the contact. The contact information includes such as an E-mail address, a mobile phone number, a service number and a domain name of the contact. The platform for managing a contact avatar receives a request for access of the user terminal through a wireless access manner. The user terminal may log in to the platform for managing a contact avatar through a vehicle-mounted wireless system, a user may log in to the platform for managing a contact avatar through a vehicle-mounted wireless system connected to a mobile phone, or a vehicle-mounted terminal device accesses the platform for managing a contact avatar through a manner, such as 3G, WIFI and LTE, of a mobile phone. The user terminal device is not limited to a vehicle-mounted system, that is, the vehicle-mounted system is merely used as an example herein. The user terminal may also be a PC, an NB, a smart phone or another handheld electronic device. The platform for managing a contact avatar opens a login interface for the user terminal, and therefore a login user name and a login user password may be set. When a user terminal accesses the platform for managing a contact avatar, the user name and password are authenticated. The user name of a contact may be set to an E-mail address or a combination of a digit and a letter. The platform for managing a contact avatar may also be provided for an anonymous user to use. The user terminal may be an unregistered user, and a skip registration button on a touch screen of a smart phone may be directly clicked so that an interface for obtaining a contact avatar is entered.

Step 208: The platform for managing a contact avatar judges whether the contact requested by the user terminal has an avatar picture that is preset by the contact and is bound to the contact information of the contact; if the avatar picture bound to contact information of the contact exists, step 210 is performed; if no avatar picture bound to contact information of the contact exists, step 212 is performed.

The platform for managing a contact avatar accesses the stored contact avatar picture database, where the database stores the binding relationship between the contact information of the contact and the avatar picture, and performs searching according to the contact information. If a corresponding avatar picture is found, the avatar picture is returned; if no corresponding avatar picture is found, a return result is blank.

Step 210: The platform for managing a contact avatar preferentially provides the avatar picture bound to the contact information to the user terminal.

Step 212: The platform for managing a contact avatar extracts a contact avatar picture tag according to the text attribute information in the request message, and may also calculate a gender probability according to a name of the contact, where the Bayesian algorithm may be adopted to calculate the gender probability.

Step 214: The platform for managing a contact avatar sends a contact avatar picture obtained through matching to the user terminal.

Step 216: After calculating the gender probability, the platform for managing a contact avatar recommends a gender with a large gender probability to the user terminal. The calculation method is described in the foregoing and is not described in detail herein.

In this embodiment of the present invention, the avatar picture bound to the contact information is preferentially provided to the user terminal, so that location for a contact avatar picture by a user is more precise, which facilitates precise obtaining of an avatar picture. In addition, when no avatar picture is preset by the contact, a proper avatar picture may be found according to text attribute information of the contact, so that the service for obtaining an avatar picture is more personalized.

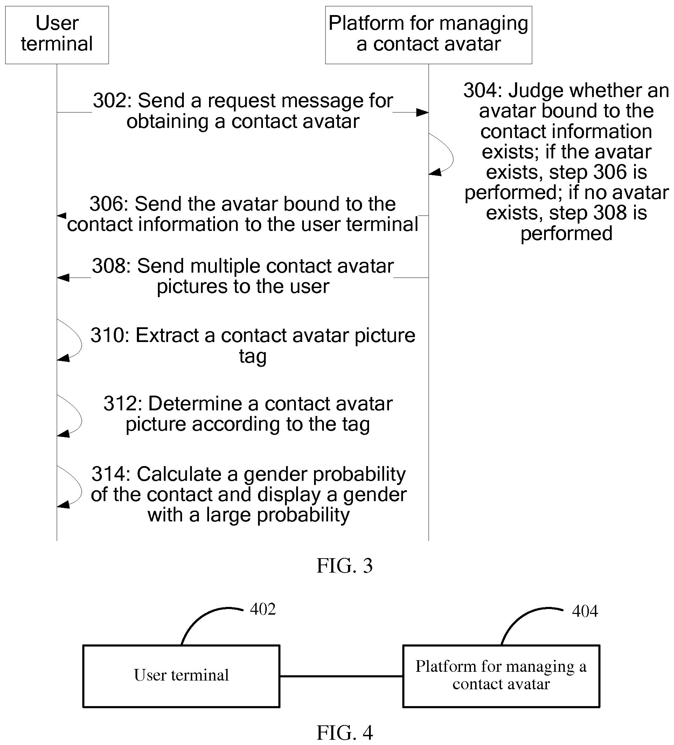

FIG. 3 illustrates a method for providing a contact avatar according to an embodiment of the present invention. In this embodiment, a user terminal is provided with functions of downloading and matching a picture tag; if a contact has an avatar picture that is bound to contact information, the bound avatar picture is provided; if a contact has no avatar picture that is bound to contact information, the user terminal performs matching with a contact avatar picture. The method includes the following steps:

Step 302: A user terminal sends a request message for obtaining a contact avatar to a platform for managing a contact avatar, where the request message includes contact information of the contact. The request message sent by a user to a platform for managing a contact avatar may not include the contact information.

Step 304: The platform for managing a contact avatar determines whether an avatar picture bound to the contact information exists according to the contact information. If the avatar picture bound to the contact information exists, step 306 is performed; if no avatar picture bound to the contact information exists, step 308 is performed.

Step 306: The platform for managing a contact avatar sends the avatar picture bound to the contact information to the user terminal.

Step 308: The platform for managing a contact avatar sends multiple contact avatar pictures to the user terminal. The platform for managing a contact avatar may extract multiple contact avatar pictures according to personalized information of the user, or randomly extract, for example, 30 to 50 avatar pictures and send the avatar pictures to the user terminal, where an avatar picture may include a tag or multiple tags. The personalized information of the user may be pre-stored in the platform for managing a contact avatar or a network storage device that the platform for managing a contact avatar may access, including information about preference, position and social interaction of the user, and so on. If the user terminal requests avatar pictures of multiple contacts, for a contact whose user contact information is bound, a bound avatar picture is sent, and for a contact without an avatar picture bound to contact information, multiple avatar pictures are sent. The user terminal may also display a status of a contact avatar, where the status includes a used identifier or an unused identifier, the used identifier indicates that the contact uses a public avatar picture service, and the unused identifier indicates that the contact does not use the public avatar picture service.

Step 310: The user terminal extracts a contact avatar picture tag according to text attribute information of the contact. The user may obtain the text attribute information of the contact and the contact information of the contact by shooting Quick Response Code information of a contact card using a camera on the user terminal, and a Quick Response Code resolution application of the user terminal resolves the shot Quick Response Code to obtain the text attribute information and the contact information.

Step 312: The user terminal determines a contact avatar picture according to the tag. When a result of matching performed by the user terminal shows that the tag extracted from the text attribute information and the tag of a picture are the same or semantically similar, the picture is recommended for use.

Step 314: The user terminal calculates a gender probability of the contact and displays a gender with a large probability.

In this embodiment of the present invention, the avatar picture of the contact is matched through the user terminal, which reduces a calculation requirement of a server, fully utilizes a processing capability of the terminal and reduces a network load.

As shown in FIG. 4, a system for providing a contact avatar picture according to an embodiment of the present invention includes: a user terminal 402 and a platform for managing a contact avatar 404. The user terminal 402 is configured to send a request message for obtaining a contact avatar to the platform for managing a contact avatar 404. The platform for managing a contact avatar 404 is configured to provide a contact avatar picture for the user terminal 402, where the contact avatar picture has a tag attribute.

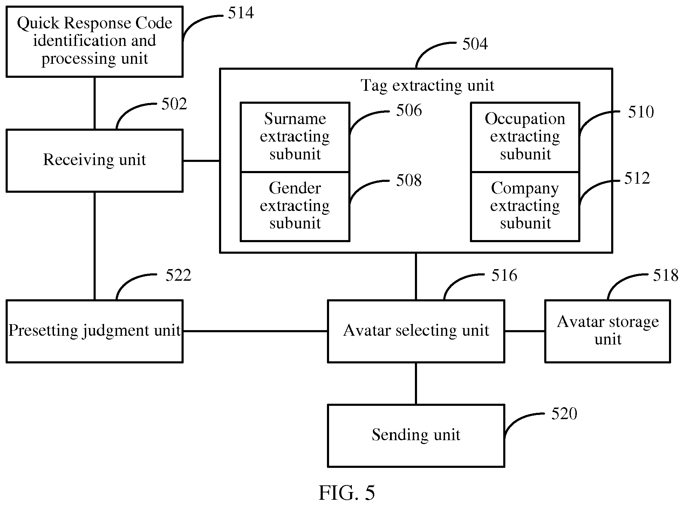

As shown in FIG. 5, a platform for managing a contact avatar according to an embodiment of the present invention includes: a receiving unit 502, a tag extracting unit 504, an avatar selecting unit 516 and a sending unit 520.

The receiving unit 502 is configured to receive a request message for obtaining a contact avatar, where the request message is sent by a user terminal and includes text attribute information of the contact. The tag extracting unit 504 is configured to extract a contact avatar picture tag according to the text attribute information in the request message. The avatar selecting unit 516 is configured to determine a contact avatar picture according to the extracted tag. The sending unit 520 is configured to send the extracted contact avatar picture to the user terminal.

Optionally, the platform for managing a contact avatar may further optionally include: a Quick Response Code identification and processing unit 514 and an avatar storage unit 518. The Quick Response Code identification and processing unit 514 is configured to identify a Quick Response Code of the text attribute information to obtain literal text attribute information when the text attribute information is received in a Quick Response Code mode. The storage unit 518 is configured to store a contact avatar picture database and a tag corresponding to a contact avatar picture.

The tag extracting unit 504 may further include one or more of the following units: a surname extracting subunit 506, a gender extracting subunit 508, an occupation extracting subunit 510 and a company extracting subunit 512. The surname extracting subunit 506 is configured to extract, when the text attribute information includes a surname of the contact, the contact avatar picture tag according to the text attribute information in the request message, including: using the surname of the contact as the contact avatar picture tag to match a contact avatar picture. The gender extracting subunit 508 is configured to calculate a gender probability according to a first name of the contact, select a gender with a large probability and recommend the gender to the user terminal, when the text attribute information includes the first name of the contact. The occupation extracting subunit 510 is configured to use an occupation as a tag and use an occupation recommendation picture as the contact avatar picture, when the text attribute information includes the occupation of the contact. The company extracting subunit 512 is configured to use a company as a tag and use a company trademark picture as the contact avatar picture, when the text attribute information includes information about the company of the contact.

The platform for managing a contact avatar may further include a presetting judgment unit 522, configured to judge, when the request message includes the contact information, whether the contact presets an avatar picture corresponding to the contact information; if the contact presets an avatar picture corresponding to the contact information, the avatar selecting unit 516 is further configured to select the avatar picture corresponding to the contact information of the contact.

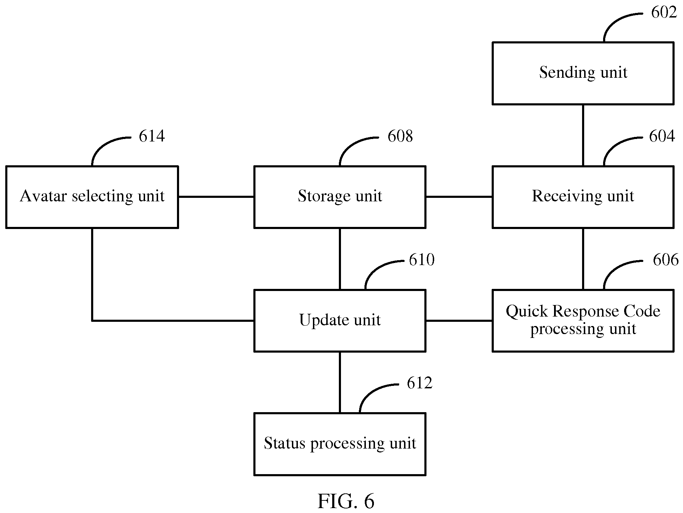

As shown in FIG. 6, a user terminal according to an embodiment of the present invention includes: a sending unit 602, a receiving unit 604, a Quick Response Code processing unit 606, a storage unit 608, an update unit 610, a status processing unit 612 and an avatar selecting unit 614.

The sending unit 602 is configured to send a request message for obtaining a contact avatar to a platform for managing a contact avatar, where the request message optionally includes contact information of the contact and text attribute information of the contact, or may not include any parameter. The receiving unit 604 is configured to receive a contact avatar picture returned by the platform for managing a contact avatar, where the avatar picture may be obtained by the platform for managing a contact avatar by queried a related avatar picture according to the contact information of the contact, or the picture may be obtained by extracting a picture tag according to the text attribute information of the contact and performing matching. The receiving unit 604 may also receive multiple avatar pictures returned by the platform for managing a contact avatar, where no association is established between the multiple avatar pictures and the contact information of the contact or the text attribute information of the contact. The Quick Response Code processing unit 606 is configured to identify a Quick Response Code to obtain literal text attribute information, when the contact information of the contact and the text attribute information of the contact are received in a Quick Response Code mode.

The storage unit 608 is configured to store the contact avatar picture and the avatar picture tag received by the receiving unit 604. The update unit 610 is configured to utilize the avatar picture received by the receiving unit 604 to update a local contact avatar. The status processing unit 612 is configured to display a status of the contact avatar, where the status includes a used identifier or an unused identifier, the used identifier indicates that the contact uses a public avatar picture service, and the unused identifier indicates that the contact does not use the public avatar picture service. The avatar selecting unit 614 is configured to determine a contact avatar picture according to the extracted tag. The avatar selecting unit 614 extracts a tag according to the text attribute information and obtains a received avatar picture through matching according to the tag, when the platform for managing a contact avatar does not provide an avatar picture related to the contact.

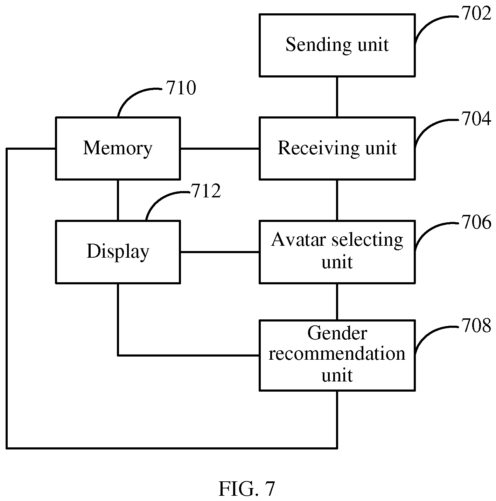

As shown in FIG. 7, a user terminal according to an embodiment of the present invention includes: a sending unit 702, a receiving unit 704, an avatar selecting unit 706, a gender recommendation unit 708, a memory 710 and a display 712.

The sending unit 702 is configured to send a request message for obtaining a contact avatar to a platform for managing a contact avatar. The receiving unit 704 is configured to receive a contact avatar picture returned by the platform for managing a contact avatar and store the contact avatar picture to the memory 710, where the contact avatar picture has a tag attribute. The avatar selecting unit 706 is configured to extract a tag according to text attribute information of the contact, and match the tag with a tag of an avatar picture to obtain a recommended avatar picture.

The gender recommendation unit 708 is an optional unit, configured to calculate a gender probability of the contact according to a name of the contact, and use the display to display a gender with a large gender probability.

Multiple algorithms may be adopted to calculate the gender probability. In this embodiment, a Bayesian algorithm is taken as an example for illustration. A major premise of assumption is: First names of males and females are significantly different. Adopt a Bayesian statistical method as follows:

1. Select training data: XX males and XX females.

2. Calculate a prior probability: P(m) indicates a male probability of a person in a training set, and P(f) indicates a female probability of a person in the training set, where

P(m) = |male|/n, |male| is the number of males in the training set, and n is the total number of persons in the training set; and

P(f) = |female|/n, |female| is the number of females in the training set, and n is the total number of persons in the training set.

3. Calculate a conditional probability: P(w1w2|m) indicates a male probability of a name with a first name of wlw2, P(w1w2|f) indicates a female probability of the name with the first name of wlw2, P(w2|m) indicates a male probability of a name with a first name of w2, and P(w2|f) indicates a female probability of the name with the first name of w2, where

P(w1w2|m) = (|{w1w2 & male}| + 1)/(|male| + M), |{w1w2 & male}| is the number of males in the training set whose first names are wlw2, and M is the number of males with different names in the training set;

P(w1w2|f) = (|{w1w2 & female}| + 1)/(|female| + F), |{w1w2 & female}| is the number of females in the training set whose first names are wlw2, and F is the number of females with different names in the training set;

P(w2|m) = (|{w2 & male}| + 1)/(|male| + M^'), |{w2 & male}| is the number of males in the training set whose first names are w2, and M^' is the number of males with different names in the training set; and

P(w2|f) = (|{w2 & female}| + 1)/(|female| + F^'), |{w2 & female}| is the number of females in the training set whose first names are w2, and F^' is the number of females with different names in the training set.

4. For an unknown name, use a Bayesian formula to determine the gender:

$$gender = \underset{gender \in \{m, f\}}{\arg\max} \; P(gender|name) = \underset{gender \in \{m, f\}}{\arg\max} \; \frac{P(name|gender)P(gender)}{P(name)}$$

$$= \underset{gender \in \{m, f\}}{\arg\max} \; P(name|gender)P(gender) = \underset{gender \in \{m, f\}}{\arg\max} \; P(w_1 w_2|gender)P(gender)$$

where, $\underset{gender \in \{m, f\}}{\arg\max}$ indicates whether the gender (gender) is male (m) or female (f) when a value of a formula behind is maximized.

The memory 710 is configured to store the contact avatar picture and tag information, and also store information such as the text attribute information of the contact and contact information of the contact. The memory may be a memory integrated with the user terminal, an external storage card, and so on.

The display 712 is configured to display the contact avatar picture, the text attribute information of the contact, the contact information of the contact, and so on. The display 712 may be a liquid crystal display, a touch screen, and so on.

In this embodiment of the present invention, the contact avatar picture is matched through a user terminal, which reduces a calculation requirement of a server, fully utilizes a processing capability of the terminal and reduces a network load.

Persons of ordinary skill in the art may understand that all or part of the steps of the methods according to the embodiments of the present invention may be implemented by a program instructing relevant hardware. The program may be stored in a computer readable storage medium. The storage medium may be, for example, a ROM, a RAM, and an optical disk.

In conclusion, it should be noted that the foregoing is merely exemplary embodiments of the present invention, but not intended to limit the protection scope of the present invention. Any modification, equivalent replacement, or improvement made without departing from the principle of the present invention should fall within the protection scope of the present invention.

## Claims

1. A method for providing a contact avatar, comprising:

   Receiving (102), by a platform for managing a contact avatar, a request message for obtaining a contact avatar, wherein the request message is sent by a user terminal and comprises text attribute information of a contact, wherein the text attribute information comprises a name of the contact;
   extracting (104), by the platform for managing a contact avatar, a contact avatar picture tag from the text attribute information in the request message, wherein the extracting comprises using a surname or a first name of the contact as the contact avatar picture tag;
   determining (106), by the platform for managing a contact avatar, a contact avatar picture according to the extracted tag; and
   calculating (212), by the platform for managing a contact avatar, a gender probability according to the first name of the contact, selecting a gender with a large gender probability, and sending (204, 216) the contact avatar picture and the gender to the user terminal.

2. The method according to claim 1, wherein the contact avatar picture comprises a gender attribute, and the method further comprises: sending a contact avatar picture with a large gender probability to the user terminal or sending avatars of both genders to the user terminal for selection, wherein an avatar corresponding to a large gender probability is preferentially displayed.

3. The method according to claim 1, wherein the text attribute information further comprises occupation information of the contact, and the method further comprises using the occupation information as the contact avatar picture tag, and determining, by the platform for managing a contact avatar, according to the extracted tag that a picture corresponding to the occupation tag is used as the contact avatar picture.

4. The method according to claim 1, wherein the text attribute information further comprises company information of the contact, and the method further comprises using the company information as the contact avatar picture tag, and determining, by the platform for managing a contact avatar, according to the extracted tag that a company trademark picture is used as the contact avatar picture.

5. The method according to claim 1, wherein the request message further comprises contact information, the contact information comprises an E-mail address, a mobile phone number, a service number or a domain name, and the method further comprises: receiving in advance, by the platform for managing a contact avatar, an avatar picture set by the contact, and storing a mapping relationship between the set avatar picture and the contact information; and providing, by the platform for managing a contact avatar according to the mapping relationship, the user terminal with a stored avatar picture corresponding to the contact information.

6. The method according to claim 5, wherein the avatar picture corresponding to the contact information takes priority over the contact avatar picture determined according to the extracted tag by the platform for managing a contact avatar.

7. A platform for managing a contact avatar, comprising:

a receiving unit (502), configured to receive a request message for obtaining a contact avatar, wherein the request message is sent by a user terminal and comprises text attribute information of a contact;
a tag extracting unit (504), configured to extract a contact avatar picture tag according to the text attribute information in the request message, wherein the tag extracting unit further comprises a surname extracting subunit (506), configured to extract, when the text attribute information comprises a surname of the contact, the contact avatar picture tag according to the text attribute information in the request message, comprising: using the surname of the contact as the contact avatar picture tag to extract a contact avatar picture, the tag extracting unit further comprises a gender extracting subunit (508), configured to calculate a gender probability according to a first name of the contact, select a gender with a large gender probability and recommend the gender to the user terminal, when the text attribute information comprises the first name of the contact;
an avatar selecting unit (516), configured to determine a contact avatar picture according to the extracted tag; and
a sending unit (520), configured to send the extracted contact avatar picture to the user terminal.

8. The platform for managing a contact avatar according to claim 7, wherein the tag extracting unit further comprises an occupation extracting subunit (510), configured to use an occupation as a tag and use an occupation recommendation picture as the contact avatar picture, when the text attribute information comprises the occupation of the contact.

9. The platform for managing a contact avatar according to claim 7 or 8, wherein the tag extracting unit further comprises a company extracting subunit (512), configured to use a company as a tag and use a company trademark picture as the contact avatar picture, when the text attribute information comprises information about the company of the contact.

10. A user terminal, wherein the user terminal comprises a display and a memory, and further comprises: a sending unit (602), configured to send a request message for obtaining a contact avatar to a platform for managing a contact avatar; a receiving unit (604), configured to receive a contact avatar picture returned by the platform for managing a contact avatar and store the contact avatar picture to the memory, wherein the contact avatar picture has a tag attribute; an avatar selecting unit (614), configured to extract a tag according to text attribute information of a contact, and match the tag with a tag of the avatar picture to obtain a recommended avatar picture; and a gender recommendation unit (708), configured to calculate a gender probability of the contact according to a name of the contact, and use the display to display a gender with a large gender probability.

**Patentansprüche**

1. Verfahren zum Bereitstellen eines Kontaktavatars, umfassend:

Empfangen (102) einer Anforderungsnachricht durch eine Plattform zum Verwalten eines Kontaktavatars zum Erhalten eines Kontaktavatars, wobei die Anforderungsnachricht durch ein Benutzerendgerät gesendet wird und Textattributinformationen eines Kontakts umfasst, wobei die Textattributinformationen einen Namen des Kontakts umfassen;
Extrahieren (104) einer Kontaktavatarbildmarkierung durch die Plattform zum Verwalten eines Kontaktavatars aus den Textattributinformationen in der Anforderungsnachricht, wobei das Extrahieren das Verwenden eines Nachnamens oder eines Vornamens des Kontakts als Kontaktavatarbildmarkierung umfasst;
Bestimmen (106) eines Kontaktavatarbilds durch die Plattform zum Verwalten eines Kontaktavatars gemäß der extrahierten Markierung; und
Berechnen (212) einer Geschlechtswahrscheinlichkeit durch die Plattform zum Verwalten eines Kontaktavatars gemäß dem Vornamen des Kontakts, Auswählen eines Geschlechts mit einer großen Geschlechtswahrscheinlichkeit und Senden (204, 216) des Kontaktavatarbilds und des Geschlechts an das Benutzerendgerät.

2. Verfahren nach Anspruch 1, wobei das Kontaktavatarbild ein Geschlechtsattribut umfasst und das Verfahren ferner Folgendes umfasst: Senden eines Kontaktavatarbilds mit einer großen Geschlechtswahrscheinlichkeit an das Benutzerendgerät oder Senden von Avataren beider Geschlechter an das Benutzerendgerät zur Auswahl, wobei ein mit einer großen Geschlechtswahrscheinlichkeit korrespondierender Avatar bevorzugt angezeigt wird.

3. Verfahren nach Anspruch 1, wobei die Textattributinformationen ferner Berufsinformationen des Kontakts umfassen und das Verfahren ferner Verwenden der Berufsinformationen als Kontaktavatarbildmarkierung und Bestimmen durch die Plattform zum Verwalten eines Kontaktavatars gemäß der extrahierten Markierung, dass ein mit der Berufsmarkierung korrespondierendes Bild als Kontaktavatarbild verwendet wird, umfasst.

4. Verfahren nach Anspruch 1, wobei die Textattributinformationen ferner Unternehmensinformationen des Kontakts umfassen und das Verfahren ferner Verwenden der Unternehmensinformationen als Kontaktavatarbildmarkierung und Bestimmen durch die Plattform zum Verwalten eines Kontaktavatars gemäß der extrahierten Markierung, dass ein Unternehmensmarkenbild als Kontaktavatarbild verwendet wird, umfasst.

5. Verfahren nach Anspruch 1, wobei die Anforderungsnachricht ferner Kontaktinformationen umfasst, die Kontaktinformationen eine E-Mail-Adresse, eine Mobiltelefonnummer, eine Dienstnummer oder einen Domänennamen umfassen und das Verfahren ferner Folgendes umfasst: vorab Empfangen eines vom Kontakt eingestellten Avatarbilds durch die Plattform zum Verwalten eines Kontaktavatars und Speichern einer Zuordnungsbeziehung zwischen dem eingestellten Avatarbild und den Kontaktinformationen; und Bereitstellen eines gespeicherten, mit den Kontaktinformationen korrespondierenden Avatarbilds für das Benutzerendgerät durch die Plattform zum Verwalten eines Kontaktavatars gemäß der Zuordnungsbeziehung.

6. Verfahren nach Anspruch 5, wobei das mit den Kontaktinformationen korrespondierende Avatarbild Vorrang vor dem durch die Plattform zum Verwalten eines Kontaktavatars gemäß der extrahierten Markierung bestimmten Kontaktavatarbild hat.

7. Plattform zum Verwalten eines Kontaktavatars, umfassend:

eine Empfangseinheit (502), die konfiguriert ist, um eine Anforderungsnachricht zum Erhalten eines Kontaktavatars zu empfangen, wobei die Anforderungsnachricht durch ein Benutzerendgerät gesendet wird und Textattributinformationen eines Kontakts umfasst;
eine Markierungsextraktionseinheit (504), die konfiguriert ist, um eine Kontaktavatarbildmarkierung gemäß den Textattributinformationen in der Anforderungsnachricht zu extrahieren, wobei die Markierungsextraktionseinheit ferner eine Nachnamenextraktionsuntereinheit (506) umfasst, die konfiguriert ist, um, wenn die Textattributinformationen einen Nachnamen des Kontakts umfassen, die Kontaktavatarbildmarkierung gemäß den Textattributinformationen in der Anforderungsnachricht zu extrahieren, umfassend: Verwenden des Nachnamens des Kontakts als Kontaktavatarbildmarkierung zum Extrahieren eines Kontaktavatarbilds, wobei die Markierungsextraktionseinheit ferner eine Geschlechtsextraktionsuntereinheit (508) umfasst, die konfiguriert ist, um eine Geschlechtswahrscheinlichkeit gemäß einem Vornamen des Kontakts zu berechnen, ein Geschlecht mit einer großen Geschlechtswahrscheinlichkeit auszuwählen und dem Benutzerendgerät das Geschlecht zu empfehlen, wenn die Textattributinformationen den Vornamen des Kontakts umfassen;
eine Avatarauswahleinheit (516), die konfiguriert ist, um ein Kontaktavatarbild gemäß der extrahierten Markierung zu bestimmen; und
eine Sendeeinheit (520), die konfiguriert ist, um das extrahierte Kontaktavatarbild an das Benutzerendgerät zu senden.

8. Plattform zum Verwalten eines Kontaktavatars nach Anspruch 7, wobei die Markierungsextraktionseinheit ferner eine Berufsextraktionsuntereinheit (510) umfasst, die konfiguriert ist, um einen Beruf als Markierung zu verwenden und ein Berufsempfehlungsbild als Kontaktavatarbild zu verwenden, wenn die Textattributinformationen den Beruf des Kontakts umfassen.

9. Plattform zum Verwalten eines Kontaktavatars nach Anspruch 7 oder 8, wobei die Markierungsextraktionseinheit ferner eine Unternehmensextraktionsuntereinheit (512) umfasst, die konfiguriert ist, um ein Unternehmen als Markierung zu verwenden und ein Unternehmensmarkenbild als Kontaktavatarbild zu verwenden, wenn die Textattributinformationen Informationen über das Unternehmen des Kontakts umfassen.

10. Benutzerendgerät, wobei das Benutzerendgerät eine Anzeige und einen Speicher umfasst und ferner Folgendes umfasst: eine Sendeeinheit (602), die konfiguriert ist, um eine Anforderungsnachricht zum Erhalten eines Kontaktavatars an eine Plattform zum Verwalten eines Kontaktavatars zu senden; eine Empfangseinheit (604), die konfiguriert ist, um ein durch die Plattform zum Verwalten eines Kontaktavatars zurückgegebenes Kontaktavatarbild zu empfangen und das Kontaktavatarbild im Speicher zu speichern, wobei das Kontaktavatarbild ein Markierungsattribut aufweist; eine Avatarauswahleinheit (614), die konfiguriert ist, um eine Markierung gemäß Textattributinformationen eines Kontakts zu extrahieren und die Markierung mit einer Markierung des Avatarbilds abzugleichen, um ein empfohlenes Avatarbild zu erhalten; und eine Geschlechtsempfehlungseinheit (708), die konfiguriert ist, um eine Geschlechtswahrscheinlichkeit des Kontakts gemäß einem Namen des Kontakts zu berechnen und die Anzeige zum Anzeigen eines Geschlechts mit einer großen Geschlechtswahrscheinlichkeit zu verwenden.

## Revendications

1. Procédé pour fournir un avatar de contact, consistant à :

    recevoir (102), au moyen d'une plate-forme pour gérer un avatar de contact, un message de demande pour obtenir un avatar de contact, dans lequel le message de demande est envoyé par un terminal utilisateur et comprend des informations d'attribut de texte d'un contact, dans lequel les informations d'attribut de texte comprennent un nom du contact ;
    extraire (104), au moyen de la plate-forme pour gérer un avatar de contact, une étiquette d'image d'avatar de contact des informations d'attribut de texte dans le message de demande, dans lequel l'extraction consiste à utiliser un nom de famille ou un prénom du contact comme étiquette d'image d'avatar de contact ;
    déterminer (106), au moyen de la plate-forme pour gérer un avatar de contact, une image d'avatar de contact en fonction de l'étiquette extraite ; et
    calculer (212), au moyen de la plate-forme pour gérer un avatar de contact, une probabilité de sexe en fonction du prénom du contact, sélectionner un sexe ayant une grande probabilité de sexe et envoyer (204, 216) l'image d'avatar de contact et le sexe au terminal utilisateur.

2. Procédé selon la revendication 1, dans lequel l'image d'avatar de contact comprend un attribut sexuel et le procédé consiste en outre à : envoyer une image d'avatar de contact ayant une grande probabilité de sexe au terminal utilisateur ou envoyer des avatars des deux sexes au terminal utilisateur pour une sélection, dans lequel un avatar correspondant à une grande probabilité de sexe est affiché de manière préférentielle.

3. Procédé selon la revendication 1, dans lequel les informations d'attribut de texte comprennent en outre des informations de travail du contact et le procédé consiste en outre à utiliser les informations de travail comme étiquette d'image d'avatar de contact et à déterminer, au moyen de la plate-forme pour gérer un avatar de contact, en fonction de l'étiquette extraite qu'une image correspondant à l'étiquette de travail est utilisée comme image d'avatar de contact.

4. Procédé selon la revendication 1, dans lequel les informations d'attribut de texte comprennent en outre des informations professionnelles du contact et le procédé consiste en outre à utiliser les informations professionnelles comme étiquette d'image d'avatar de contact et à déterminer, au moyen de la plate-forme pour gérer un avatar de contact, en fonction de l'étiquette extraite qu'une image de l'emblème de la société est utilisée comme image d'avatar de contact.

5. Procédé selon la revendication 1, dans lequel le message de demande comprend en outre des informations de contact, les informations de contact comprennent une adresse de courrier électronique, un numéro de téléphone mobile, un numéro de service ou un nom de domaine, et le procédé consiste en outre à : recevoir à l'avance, au moyen de la plate-forme pour gérer un avatar de contact, une image d'avatar déterminée par le contact et stocker une relation de mise en correspondance entre l'image d'avatar déterminée et les informations de contact ; et fournir, au moyen de la plate-forme pour gérer un avatar de contact en fonction de la relation de mise en correspondance, au terminal d'utilisateur une image d'avatar stockée correspondant aux informations de contact.

6. Procédé selon la revendication 5, dans lequel l'image d'avatar correspondant aux informations de contact a la priorité sur l'image d'avatar de contact déterminée en fonction de l'étiquette extraite par la plate-forme pour gérer un avatar de contact.

7. Plate-forme pour gérer un avatar de contact, comprenant :

une unité de réception (502), configurée pour recevoir un message de demande pour obtenir un avatar de contact, dans lequel le message de demande est envoyé par un terminal utilisateur et comprend des informations d'attribut de texte d'un contact ;
une unité d'extraction d'étiquette (504), configurée pour extraire une étiquette d'image d'avatar de contact en fonction des informations d'attribut de texte dans le message de demande, dans lequel l'unité d'extraction d'étiquette comprend en outre une sous-unité d'extraction de nom de famille (506), configurée pour extraire, lorsque les informations d'attribut de texte comprennent un nom de famille du contact, l'étiquette d'image d'avatar de contact en fonction des informations d'attribut de texte dans le message de demande, consistant à : utiliser le nom de famille du contact comme étiquette d'image d'avatar de contact pour extraire une image d'avatar de contact, l'unité d'extraction d'étiquette comprend en outre une sous-unité d'extraction de sexe (508), configurée pour calculer une probabilité de sexe en fonction d'un prénom du contact, sélectionner un sexe ayant une grande probabilité de sexe et recommander le sexe au terminal utilisateur lorsque les informations d'attribut de texte comprennent le prénom du contact ;
une unité de sélection d'avatar (516), configurée pour déterminer une image d'avatar de contact en fonction de l'étiquette extraite ; et
une unité d'envoi (520), configurée pour envoyer l'image d'avatar de contact extraite au terminal utilisateur.

8. Plate-forme pour gérer un avatar de contact selon la revendication 7, dans laquelle l'unité d'extraction d'étiquette comprend en outre une sous-unité d'extraction de travail (510), configurée pour utiliser un travail comme étiquette et utiliser une image de recommandation de travail comme image d'avatar de contact, lorsque les informations d'attribut de texte comprennent le travail du contact.

9. Plate-forme pour gérer un avatar de contact selon la revendication 7 ou 8, dans laquelle l'unité d'extraction d'étiquette comprend en outre une sous-unité d'extraction de société (512), configurée pour utiliser une société comme étiquette et utiliser une image de l'emblème de la société comme image d'avatar de contact lorsque les informations d'attribut de texte comprennent des informations concernant la société du contact.

10. Terminal utilisateur, dans lequel le terminal utilisateur comprend un dispositif d'affichage et une mémoire, et comprend en outre : une unité d'envoi (602), configurée pour envoyer un message de demande pour obtenir un avatar de contact à une plate-forme pour gérer un avatar de contact ; une unité de réception (604), configurée pour recevoir une image d'avatar de contact renvoyée par la plate-forme pour gérer un avatar de contact et stocker l'image d'avatar de contact dans la mémoire, dans lequel l'image d'avatar de contact possède un attribut d'étiquette ; une unité de sélection d'avatar (614), configurée pour extraire une étiquette en fonction d'informations d'attribut de texte d'un contact et mettre en correspondance l'étiquette avec une étiquette de l'image d'avatar pour obtenir une image d'avatar recommandée ; et une unité de recommandation de sexe (708), configurée pour calculer une probabilité de sexe du contact en fonction d'un nom du contact et utiliser le dispositif d'affichage pour afficher un sexe ayant une grande probabilité de sexe.

Receive a request message for obtaining a
contact avatar, where the request message is
sent by a user terminal and includes text
attribute information of the contact ⌇102

Extract a contact avatar picture tag according to
the text attribute information in the request
message ⌇104

Determine a contact avatar picture according to
the tag, and send the contact avatar picture to
the user terminal ⌇106

FIG. 1

| User terminal | Platform for managing a contact avatar | Contact |
|---|---|---|

202: Receive an avatar picture
set by a contact

204: Store a mapping
relationship between
contact information and the
avatar picture

206: Request message for
obtaining a contact avatar

208: Whether the contact
presets an avatar picture

210: Send the preset contact
avatar
picture

212: Extract a contact
avatar picture tag,
determine a contact avatar
picture according to the tag
and calculate a gender
probability

214: Send the contact avatar
picture to the user terminal

216: Send a gender with a large
probability to the user terminal

FIG. 2

User
terminal

Platform for managing
a contact avatar

302: Send a request message for
obtaining a contact avatar

304: Judge whether an
avatar bound to the
contact information
exists; if the avatar
exists, step 306 is
performed; if no avatar
exists, step 308 is
performed

306: Send the avatar bound to the
contact information to the user terminal

308: Send multiple contact avatar
pictures to the user

310: Extract a contact avatar picture
tag

312: Determine a contact avatar
picture according to the tag

314: Calculate a gender probability
of the contact and display a gender
with a large probability

FIG. 3

402

404

User terminal

Platform for managing a
contact avatar

FIG. 4

FIG. 5

FIG. 6

702

Sending unit

710

Memory

704

Receiving unit

712

Display

706

Avatar selecting
unit

708

Gender
recommendation
unit

FIG. 7

**EP 2 696 551 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009165090 A1